# EUROPEAN PATENT APPLICATION

(11) **EP 4 439 716 A1**
(43) Date of publication of application: **02.10.2024**
(21) Application number: 23811105.8
(22) Date of filing: 24.05.2023
(51) Int. Cl.: H01M 4/36, H01M 4/58, H01M 4/62

(54) **POSITIVE ELECTRODE MATERIAL AND PREPARATION METHOD THEREFOR**

(30) Priority: 27.05.2022 CN 202210594559
(71) Applicant: SVOLT ENERGY TECHNOLOGY CO., LTD, Changzhou, Jiangsu 213200 (CN)
(72) Inventor: REN, Haipeng, hangzhou, Jiangsu 213200 (CN); JIANG, Weijun, hangzhou, Jiangsu 213200 (CN); CHEN, Sixian, hangzhou, Jiangsu 213200 (CN); ZHENG, Xiaoxing, hangzhou, Jiangsu 213200 (CN); HAO, Leiming, hangzhou, Jiangsu 213200 (CN); YANG, Hongxin, hangzhou, Jiangsu 213200 (CN); GAO, Fei, hangzhou, Jiangsu 213200 (CN)
(74) Representative: Groth & Co. KB
(86) International application number: PCT/CN2023/096086
(87) International publication number: WO 2023/227035

(57) **Abstract**

The present application relates to the field of sodium-ion battery materials, and in particular, to a positive electrode material and a preparation method therefor. The positive electrode material comprises polyanion sodium-iron salt and graphene coated outside the polyanion sodium-iron salt. The positive electrode material is of a hollow porous structure, and the hollow porous structure is combined with the graphene coated outside the polyanion sodium-iron salt, such that the positive electrode material has obviously improved charging-discharging performance and cycling stability.

## Description

### CROSS REFERENCE TO RELATED APPLICATIONS

The present application claims priority to Chinese Patent Application No. 202210594559.6, entitled "POSITIVE ELECTRODE MATERIAL AND PREPARATION METHOD THEREFOR", and filed to China National Intellectual Property Administration on May 27, 2022, the entire contents of which are incorporated herein by reference.

### TECHNICAL FIELD

The present application relates to the field of sodium-ion battery materials, and specifically to a positive electrode material and a preparation method thereof.

### BACKGROUND

With the rapid development of the new energy industry, lithium-ion batteries play an extremely important role in energy storage and its power batteries. Due to the relatively low distribution and content of lithium resources in the earth's crust, the price of lithium salts has risen rapidly, leading to a sharp increase in the cost of raw materials. Sodium-ion batteries are the main energy storage tool in the later stages of the development of the new energy industry due to the extremely abundant sodium resources and low manufacturing costs. Although current research on sodium-ion batteries has achieved some impressive results, there are still many issues that require further research, especially positive electrode materials for sodium-ion batteries.

At present, there are two main categories of positive electrode material for sodium-ion batteries, one is the metal oxidation type, and the other is the polyanionic type. The polyanionic type has attracted widespread attention due to its relatively high electrode potential, sturdy structural framework, good thermal stability, and fast sodium ion deintercalation kinetics. Among them, due to the abundant reserves and low prices of raw material iron element, as well as the simple material preparation process, sodium-iron-based polyanionic type materials have great advantages in the competition for the pursuit of large-scale production, cost-efficiency and environmentally friendliness of sodium-ion battery positive electrode materials, and are expected to become a new generation of battery materials, but their capacity and cycling stability need to be further improved.

### SUMMARY OF THE INVENTION

Therefore, the technical problem to be solved by the present application is to overcome the shortcomings of low capacity and poor cycling stability in the prior art, thereby providing a positive electrode material and a preparation method thereof.

To this end, the present application provides a positive electrode material, which comprises a polyanion sodium-iron salt and graphene coated outside the polyanion sodium-iron salt, and the positive electrode material has a hollow porous structure.

Further, the positive electrode material has a hollow porous spherical structure; preferably, the positive electrode material has an inner diameter ranging from 0.5µm to 9µm and a wall thickness ranging from 1µm to 13µm; more preferably, the positive electrode material has an inner diameter ranging from 1µm to 5µm and a wall thickness ranging from 2µm to 5µm.

Further, the positive electrode material has a pore diameter ranging from 50nm to 500nm, a porosity ranging from 3% to 18%, and a specific surface area ranging from 5m²/g to 40m²/g; preferably, the positive electrode material has a pore diameter ranging from 100nm to 300nm, a porosity ranging from 5% to 12%, and a specific surface area ranging from 10m²/g to 30m²/g.

Further, the pore diameter a, the porosity b, and the specific surface area c of the positive electrode material satisfy the following relationship: 200<a×c/b<800.

Further, the molecular formula of the polyanion sodium-iron salt is: NaₓFe_{y}M_{q}Bᵣ(AOn)_{z}(P₂O₇)ₘ, wherein M is selected from at least one of Ti, V, Mn, Fe, Co, Ni, Cu and Zn, A is selected from one of silicon, phosphorus, sulfur, carbon and boron, B is at least one of La, Ce, Pr, Nd, Pm, Sm, Eu, Gd, Td, Dy, Er, Tm, Yb, Lu, Sc and Y, where 2≤x≤4, 0.5≤y≤3, 0≤q≤2, 0≤r≤0.3. and y+q+r≤3, 0≤z≤3, 0≤m≤3, 1≤n≤4, and z and m are not 0 at the same time, and the molecular formula satisfies charge conservation; preferably, M is Mn, B is La, and A is P.

Further, the molecular formula of the polyanion sodium-iron salt is: NaₓFe_{y}Mn_{q}Laᵣ(PO₄)_{z}(P₂O₇)ₘ, 3≤x≤4, 1.5≤y≤2, 1≤q≤1.5, 0.2≤r≤0.3, y+q+r≤3, 1<z<2, and 1≤m≤2.

Further, the mass of graphene accounts for 1% to 20% of the total mass of the positive electrode material.

The present application further provides a method for preparing the positive electrode material, wherein the method comprises the following steps:
step S1: mixing carbon spheres and water to prepare a base liquid, adding an anion source, an alkaline solution and a metal solution containing iron salt into the base liquid to perform a precipitation reaction, and adding a sodium salt to prepare a precursor solution;
step S2: placing graphene in a vacuum environment to prepare a graphene film, electrically spraying the graphene film using the precursor solution, and calcining to obtain a positive electrode material with a hollow porous structure.

Wherein, the iron salt is a conventional iron salt in the art, such as, at least one of ferrous sulfate, ferric ammonium sulfate, ferrous ammonium sulfate, ferrous oxalate, ferric ammonium oxalate, ferrous chloride, ferric citrate, ferric ammonium citrate, iron phosphate and iron nitrate.

Further, in step S2, the electrically spraying is carried out at a feed speed ranging from 4mL/h to 10mL/h, a spray voltage ranging from 10 kV to 20kV, a spray nozzle diameter ranging from 8µm to 12µm, and a discharge temperature ranging from 50°C to 90°C; and/or, the calcining is carried out at a temperature ranging from 300°C to 800°C for a time period ranging from 5h to 30h.

Further, the calcining comprises increasing the temperature to 350°C to 450°C at a heating rate ranging from 0.5°C/min to 2°C/min in a nitrogen atmosphere, maintaining this temperature for calcining for 3 hours to 5 hours, then increasing the temperature to 650°C to 850°C at a heating rate ranging from 0.5°C/min to 2°C/min, and maintaining this temperature for calcining for 5 hours to 20 hours; preferably, the calcining comprises increasing the temperature to 380°C to 420°C at a heating rate ranging from 0.8°C/min to 1.5°C/min in a nitrogen atmosphere, maintaining this temperature for calcining for 3 hours to 5 hours, then increasing the temperature to 680°C to 720°C at a heating rate ranging from 0.8°C/min to 1.5°C/min, and maintaining this temperature for calcining for 8 hours to 12 hours.

Further, step S1 also satisfies at least one of the following (1)-(8):
(1) the metal solution also comprises M salt and/or B salt; preferably, M is selected from at least one of Ti, V, Mn, Fe, Co, Ni, Cu and Zn; B is at least one of La, Ce, Pr, Nd, Pm, Sm, Eu, Gd, Td, Dy, Er, Tm, Yb, Lu, Sc and Y; more preferably, M is Mn, and B is La;
(2) the anion source is selected from at least one of a silicon source, a phosphorus source, a sulfur source, a carbon source and a boron source; preferably, the anion source is selected from at least one of ammonium dihydrogen phosphate, diammonium hydrogen phosphate, triammonium phosphate, phosphoric acid, sodium dihydrogen phosphate, disodium hydrogen phosphate, sodium ammonium hydrogen phosphate, pyrophosphoric acid, sodium pyrophosphate, hypophosphorous acid, ammonium bicarbonate, ammonium sulfate, ammonium borate and ammonium silicate;
(3) the precipitation reaction process also comprises the step of adding protonic acid into the base liquid; and the anion source is a phosphorus source;
   preferably, the ratio of the molar amount of phosphate ions in the phosphorus source added into the base liquid, the molar amount of hydrogen ions in the protonic acid, and the total molar amount of metal elements added into the base liquid is (2-4):(1-8):(1-3), more preferably (2-4):(1-2):(1-3);
   taking ammonium dihydrogen phosphate and citric acid (protonic acid) as examples, 1 molecule of ammonium dihydrogen phosphate contains 1 molecule of phosphate ions, and 1 molecule of citric acid is electrolyzed to produce 2 molecules of hydrogen ions;
(4) during the precipitation reaction, the pH value of the reaction liquid is controlled to be 2 to 5, preferably 2.2 to 3.2; during the precipitation reaction, the stirring rotation speed is controlled to be 500 rpm to 1000 rpm, preferably 600 rpm to 800 rpm; and during the precipitation reaction, the temperature of the reaction liquid is controlled to be 70 °C to 110°C, preferably 80°C to 100°C;
(5) the carbon spheres have a particle diameter ranging from 0.5µm to 8.0 µm, preferably from 1 µm to 4 µm;
(6) the concentration of the metal solution is in a range from 0.5 mol/L to 3mol/L, preferably from 0.6 mol/L to 1.5mol/L; the concentration of the anion source is in a range from 0.5 mol/L to 3mol/L; and the metal solution and the anion source are added dropwise at a dropping speed ranging from 60 mL/h to 400mL/h into the base liquid for a time period ranging from 5 hours to 60 hours for reaction, preferably 10 hours to 30 hours;
(7) the alkaline solution is ammonia water, preferably, the ammonia water has a concentration ranging from 0.5mol/L to 1.5mol/L;
(8) the base liquid has a concentration ranging from 50g/L to 200g/L.

Wherein, the protonic acid is at least one of citric acid, oxalic acid, lactic acid and boric acid; the phosphorus source is at least one of ammonium dihydrogen phosphate, diammonium hydrogen phosphate, triammonium phosphate, phosphoric acid, sodium dihydrogen phosphate, disodium hydrogen phosphate, sodium ammonium hydrogen phosphate, pyrophosphoric acid, sodium pyrophosphate and hypophosphorous acid. The protonic acid solution has a concentration ranging from 0.5mol/L to 3mol/L.

The technical solution of the present application has the following advantages.
1. The present application provides a positive electrode material, wherein the positive electrode material comprises a polyanion sodium-iron salt and graphene coated outside the polyanion sodium-iron salt, and the positive electrode material has a hollow porous structure. The combination of this hollow porous structure and graphene coated outside the polyanion sodium-iron salt results in significantly improved charging-discharging performance and cycling stability of the positive electrode material. On the one hand, the positive electrode material with a hollow porous structure has more highly open three-dimensional pores and channels, which is conducive to the intercalation and deintercalation of sodium ions with large particle diameter. At the same time, the contact area with the electrolyte is increased, which greatly improves the conductivity and charging-discharging performance, the damage to the structure of the sodium positive electrode material caused by rapid intercalation and deintercalation of sodium ions is effectively avoided. Graphene coated outside the polyanion sodium-iron salt can greatly increase the bonding force of the material on the current collector, improve the flexibility and ductility of the positive electrode plates of the positive electrodes, enhance the structural stability, and thus improve the cycling stability.
2. The positive electrode material provided by the present application has a hollow porous spherical structure. By controlling the positive electrode material to have an inner diameter ranging from 0.5µm to 9µm and a wall thickness ranging from 1µm to 13µm, in particular, by controlling the positive electrode material to havean inner diameter ranging from 1µm to 5µm and a wall thickness ranging from 2µm to 5µm, the structural stability of the positive electrode material can be further improved, thereby improving the material's cycling performance and rate performance.
3. The positive electrode material provided by the present application has a hollow porous spherical structure. By controlling the positive electrode material to have a pore diameter ranging from 50nm to 500nm, a porosity ranging from 3% to 18%, and a specific surface area ranging from 5m²/g to 40m²/g, in particular, by controlling the positive electrode material to have a pore diameter ranging from 100nm to 300nm, a porosity ranging from 5% to 12%, and a specific surface area ranging from 10m²/g to 30m²/g, the structural stability and rate performance of the material can be further improved.
4. The preparation method of the positive electrode material provided in the present application comprises mixing carbon spheres and water to prepare a base liquid, adding an anion source, an alkaline solution and a metal solution containing iron salt into the base liquid to perform a precipitation reaction, and adding a sodium salt to prepare a precursor solution; placing graphene in a vacuum environment to prepare a graphene film, electrically spraying the graphene film using the precursor solution, and calcining to obtain a positive electrode material. Using the carbon spheres solution as the base liquid, a precursor of the polyanion sodium-iron salt is prepared on the carbon spheres through a precipitation reaction, and electrospraying is used to coat graphene on the precursor of the polyanion sodium-iron salt, wherein the precursor of the polyanion sodium-iron salt covers the outside of the carbon spheres, and graphene is the outermost layer of the material. The carbon spheres are removed by calcination to obtain a positive electrode material with a hollow porous structure. The preparation method is simple and convenient.
5. The method for preparing the positive electrode material provided in the present application enables that the pore diameter, porosity and specific surface area of the positive electrode material are within the preferred range, and the capacity, cycling stability and rate performance of the positive electrode material are further improved by controlling the calcination conditions, that is, the calcining comprises increasing the temperature to 350°C to 450°C at a heating rate ranging from 0.5°C/min to 2°C/min in a nitrogen atmosphere, maintaining this temperature for calcining for 3 hours to 5 hours, then increasing the temperature to 650°C to 850°C at a heating rate ranging from 0.5°C/min to 2°C/min, and maintaining this temperature for calcining for 5 hours to 20 hours; preferably, the calcining comprises increasing the temperature to 380°C to 420°C at a heating rate ranging from 0.8°C/min to 1.5°C/min in a nitrogen atmosphere, maintaining this temperature for calcining for 3 hours to 5 hours, then increasing the temperature to 680°C to 720°C at a heating rate ranging from 0.8°C/min to 1.5°C/min, and maintaining this temperature for calcining for 8 hours to 12 hours.
6. In the method for preparing the positive electrode material provided in the present application, the ratio of the molar amount of phosphate ions in the phosphorus source added, the molar amount of hydrogen ions in the protonic acid, and the total molar amount of metal elements added into the base liquid is (2-4):(1-2):(1-3). This ratio can ensure that excess phosphate ion can generate pyrophosphate ion at high temperatures in the later stage, which can further improve the stability of the material structure and provide channels for sodium ion intercalation and deintercalation, thereby increasing the capacity of the material.

### BRIEF DESCRIPTION OF THE DRAWINGS

In order to illustrate the technical solutions in the specific embodiments of the present application or in the prior art more clearly, the drawings need to be used in the description of the specific embodiments or the prior art will be briefly introduced below. Obviously, the drawings in the following description show some of the embodiments of the present application, and those of ordinary skill in the art may also obtain other drawings from these drawings without creative efforts.
Figure 1 is an infrared spectrum of the positive electrode material obtained in Example 1;
Figure 2 is a TEM image of the positive electrode material obtained in Example 1;
Figure 3 is an SEM image of the positive electrode material obtained in Example 1;
Figure 4 is a cycling performance diagram of the positive electrode material obtained in Example 1 in Experimental Example 3 at rates of 0.2C, 1C and 5C;
Figure 5 is an XRD pattern of the positive electrode material obtained in Example 1.

### DETAILED DESCRIPTION

The following examples are provided for a better understanding of the present application, are not limited to the best implementations, and do not constitute a limitation on the content or scope of protection of the present application. Any product identical or similar to that of the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the documents in the present field can be followed. The reagents or instruments used without the manufacturer indicated are conventional reagents and products that are commercially available. Carbon spheres were purchased from Xianfeng Nanomaterials Company, with models XF252, XFP12, XFP13, XFP14, and XFP05, with average particle diameters of 0.5 microns, 1 micron, 2 microns, 4 microns, and 8 microns in sequence.

### Example 1

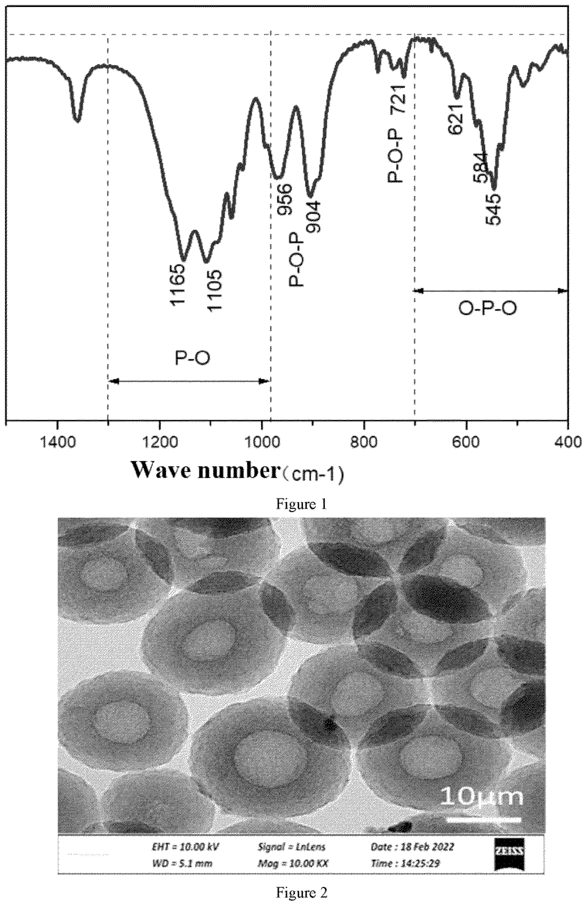

This example provides a positive electrode material. The positive electrode material comprises a polyanion sodium-iron salt and graphene coated outside the polyanion sodium-iron salt. Wherein, referring to Figure 1, the positive electrode material has a P-O-P bonding in the wavenumber segment range of 721cm⁻¹ to 956cm⁻¹, corresponding to the P₂O₇ group, namely the pyrophosphate ion group; while the 400 cm⁻¹ to 700cm⁻¹ and 975 cm⁻¹ to 1300cm⁻¹ wavenumber segments are O-P-O bonding and P-O bonding, respectively, corresponding to the PO₄ group, that is, the phosphate ion group. The molecular formula of the polyanion sodium-iron salt is Na₄(Fe_{0.6}Mn_{0.392}La_{0.08})₃(PO₄)₂P₂O₇.

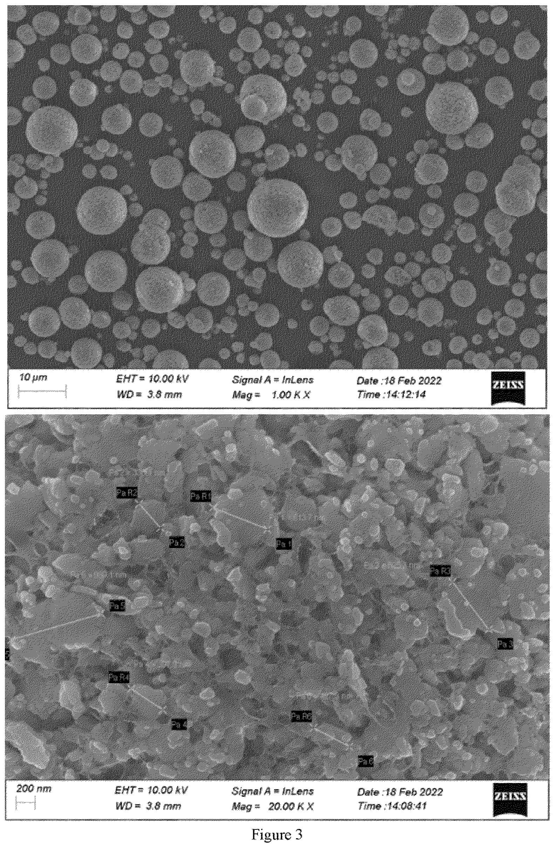

Referring to Figures 2 and 3, TEM and SEM images confirm that the positive electrode material has a hollow porous spherical structure. The inner diameter, wall thickness, pore diameter, porosity and specific surface area of the positive electrode material are shown in Table 2.

The method for preparing the positive electrode material comprises the following steps.
(1) Iron sulfate, manganese sulfate and lanthanum sulfate were mixed according to a molar ratio of metal elements of 0.6:0.392:0.08, water was added therein to prepare a metal solution with a total mass concentration of metal salts of 1.2 mol/L. Pure water was used as the solvent to prepare a 1mol/L ammonium dihydrogen phosphate solution, a 0.5 mol/L ammonia water solution, and a 1 mol/L citric acid aqueous solution, respectively. Carbon spheres with a particle diameter of 2 µm were added into pure water as crystal seed, and stirred at 400 rpm for 10 min to prepare a base liquid with a concentration of 100 g/L. The metal solution, ammonium dihydrogen phosphate solution and citric acid aqueous solution were added into the base liquid at a dropping speed of 200ml/min, 300ml/min and 60ml/min, respectively. The dropping time of all the three solutions was all 20 hours. During the reaction, ammonia water solution was also added to control the pH value of the reaction system to be 2.5, the rotation speed was controlled to be 700 rpm, and the temperature was controlled to be 90°C. After the dropwise addition, the reaction was completed, and then sodium carbonate was added according to the Na:(Fe+Mn+La) molar ratio of 4:3, and stirred at 700 rpm for 1 hour to obtain a precursor solution. After drying, water was added to make a precursor solution with a solid content of 500g/L.
(2) 48g of graphene was put into a vacuum vessel to obtain a graphene film, and then the electrospray method was used to spray 2L of the precursor solution with a solid content of 500g/L on the graphene film at a electrospray speed of 6 ml/h, a spray voltage of 15KV, a spray nozzle diameter of 10µm, and an outlet temperature of 80°C, which can ensure the slow drying of the mixture and obtain the dried product. The dried product was put into a tube furnace and calcined in a nitrogen atmosphere. The temperature was raised to 400°C at a heating rate of 1°C/min, the materials were maintained at this temperature for calcining for 4 hours, then the temperature was raised to 700°C at a heating rate of 1°C/min, and the materials were maintained at this temperature for calcining for 10 hours, the nitrogen atmosphere was maintained at 1L/min; the calcined material was sieved with 400 mesh to make 646.3g of positive electrode material.

### Example 2

This example provides a positive electrode material and a preparation method thereof. The method for preparing the positive electrode material comprises the following steps.
(1) Iron sulfate, manganese sulfate and lanthanum sulfate were mixed according to a molar ratio of metal elements of 0.6:0.392:0.08, water was added therein to prepare a metal solution with a total mass concentration of metal salts of 1.3 mol/L. Pure water was used as the solvent to prepare a 1.2mol/L ammonium dihydrogen phosphate solution, a 1 mol/L ammonia water solution, and a 1.2 mol/L citric acid aqueous solution, respectively. Carbon spheres with a particle diameter of 1 µm were added into pure water as crystal seed, and stirred at 400 rpm for 10 min to prepare a base liquid with a concentration of 150 g/L. The metal solution, ammonium dihydrogen phosphate solution and citric acid aqueous solution were added into the base liquid at a dropping speed of 100ml/min, 250ml/min and 50ml/min, respectively. The dropping time for all the three solutions was all 15 hours. During the reaction, ammonia water solution was also added to control the pH value of the reaction system to be 3.2, the rotation speed was controlled to be 600 rpm, and the temperature was controlled to be 100°C. After the dropwise addition, the reaction was completed, and then sodium carbonate was added according to the Na:(Fe+Mn+La) molar ratio of 4:3, and stirred at 700 rpm for 1 hour to obtain a precursor solution. After drying, water was added to make a precursor solution with a solid content of 500g/L.
(2) 6g of graphene was put into a vacuum vessel to obtain a graphene film, and then the electrospray method was used to spray 2L of the precursor solution with a solid content of 500g/L on the graphene film at a electrospray speed of 10 ml/h, a spray voltage of 20KV, a spray nozzle diameter of 10µm, and an outlet temperature of 70°C, which can ensure the slow drying of the mixture and obtain the dried product. The dried product was put into a tube furnace and calcined in a nitrogen atmosphere. The temperature was raised to 380°C at a heating rate of 1.5°C/min, the materials were maintained at this temperature for calcining for 4 hours, then the temperature was raised to 720°C at a heating rate of 0.8°C/min, and the materials were maintained at this temperature for calcining for 12 hours, the nitrogen atmosphere was maintained at 1L/min; the calcined material was sieved with 400 mesh to make 603.6g of positive electrode material.

### Example 3

This example provides a positive electrode material and a preparation method thereof. The method for preparing the positive electrode material comprises the following steps.
(1) Iron sulfate, manganese sulfate and lanthanum sulfate were mixed according to a molar ratio of metal elements of 0.6:0.392:0.08, water was added therein to prepare a metal solution with a total mass concentration of metal salts of 0.9 mol/L. Pure water was used as the solvent to prepare a 0.8mol/L ammonium dihydrogen phosphate solution, a 1.5 mol/L ammonia water solution, and a 1.5 mol/L citric acid aqueous solution, respectively. Carbon spheres with a particle diameter of 4 µm were added into pure water as crystal seed, and stirred at 400 rpm for 10 min to prepare a base liquid with a concentration of 100 g/L. The metal solution, ammonium dihydrogen phosphate solution and citric acid aqueous solution were added into the base liquid at a dropping speed of 200ml/min, 380ml/min and 500ml/min, respectively. The dropping time for all the three solutions was all 20 hours. During the reaction, ammonia water solution was also added to control the pH value of the reaction system to be 2.5, the rotation speed was controlled to be 800 rpm, and the temperature was controlled to be 80°C. After the dropwise addition, the reaction was completed, and then sodium carbonate was added according to the Na:(Fe+Mn+La) molar ratio of 4:3, and stirred at 700 rpm for 1 hour to obtain a precursor solution. After drying, water was added to make a precursor solution with a solid content of 500g/L.
(2) 120g of graphene was put into a vacuum vessel to obtain a graphene film, and then the electrospray method was used to spray 2L of the precursor solution with a solid content of 500g/L on the graphene film at a electrospray speed of 4 ml/h, a spray voltage of 10KV, a spray nozzle diameter of 10µm, and an outlet temperature of 80°C, which can ensure the slow drying of the mixture and obtain the dried product. The dried product was put into a tube furnace and calcined in a nitrogen atmosphere. The temperature was raised to 400°C at a heating rate of 0.8°C/min, the materials were maintained at this temperature for calcining for 4 hours, then the temperature was raised to 700°C at a heating rate of 1.5°C/min, and the materials were maintained at this temperature for calcining for 8 hours, the nitrogen atmosphere was maintained at 1L/min; the calcined material was sieved with 400 mesh to make 718.5g of positive electrode material.

### Example 4

This example provides a positive electrode material and a preparation method thereof, which was basically the same as that of Example 1. The only difference was that in step (1), carbon spheres with a particle diameter of 8 µm were used, the dropping time for all the three solutions was 60 hours, and 530.3g of positive electrode material was obtained.

### Example 5

This example provides a positive electrode material and a preparation method thereof, which was basically the same as that of Example 1. The only difference was that in step (1), carbon spheres with a particle diameter of 0.5 µm were used, the dropping time for all the three solutions was 5 hours, and 658.2g of positive electrode material was obtained.

### Example 6

This example provides a positive electrode material and a preparation method thereof, which was basically the same as that of Example 1. The only difference was that during the calcining in step (2), the temperature was raised to 400°C at a heating rate of 1°C/min, the materials were maintained at this temperature for calcining for 4 hours, and then the temperature was raised to 700°C at a heating rate of 1°C/min, and the materials were maintained at this temperature for calcining for 20 hours, the nitrogen atmosphere were maintained at 1L/min, and 634.5g of positive electrode material was obtained.

### Example 7

This example provides a positive electrode material and a preparation method thereof, which was basically the same as that of Example 1. The only difference was that during the calcining in step (2), the temperature was raised to 400°C at a heating rate of 1°C/min, the materials were maintained at this temperature for calcining for 4 hours, and then the temperature was raised to 700°C at a heating rate of 1°C/min, and the materials were maintained at this temperature for calcining for 5 hours, the nitrogen atmosphere were maintained at 1L/min, and 647.3g of positive electrode material was obtained.

### Example 8

This example provides a positive electrode material. The positive electrode material comprises a polyanion sodium-iron salt and graphene coated outside the polyanion sodium-iron salt. The molecular formula of the polyanion sodium-iron salt is Na₄Fe₃(PO₄)₂P₂O₇. The preparation method comprises the following steps.
(1) Iron sulfate was added into water to make a metal solution with an iron sulfate concentration of 1.2mol/L. Pure water was used as the solvent to prepare a 1mol/L ammonium dihydrogen phosphate solution, a 0.5 mol/L ammonia water solution, and a 1 mol/L citric acid aqueous solution, respectively. Carbon spheres with a particle diameter of 2 µm were added into pure water as crystal seed, and stirred at 400 rpm for 10 min to prepare a base liquid with a concentration of 100 g/L. The metal solution, ammonium dihydrogen phosphate solution and citric acid aqueous solution were added into the base liquid at a dropping speed of 200ml/min, 300ml/min and 60ml/min, respectively. At the same time, ammonia water solution was also added to control the pH value of the reaction system to be 2.5, the rotation speed was controlled to be 700 rpm, and the temperature was controlled to be 90°C. The dropping time for all the three solutions was 20 hours. After the reaction was completed, sodium carbonate was added according to the Na:Fe molar ratio of 4:3, and stirred at 700 rpm for 1 hour to obtain a precursor solution. After drying, water was added to make a precursor solution with a solid content of 500g/L.
(2) 78.64g of graphene was put into a vacuum vessel to obtain a graphene film, and then the electrospray method was used to spray 2L of the precursor solution with a solid content of 500g/L on the graphene film at a electrospray speed of 6 ml/h, a spray voltage of 15KV, a spray nozzle diameter of 10µm, and an outlet temperature of 80°C, which can ensure the slow drying of the mixture and obtain the dried product. The dried product was put into a tube furnace and calcined in a nitrogen atmosphere. The temperature was raised to 400°C at a heating rate of 1°C/min, the materials were maintained at this temperature for calcining for 4 hours, then the temperature was raised to 700°C at a heating rate of 1°C/min, and the materials were maintained at this temperature for calcining for 10 hours, the nitrogen atmosphere was maintained at 1L/min; and the calcined material was sieved with 400 mesh to make 1031.4g of positive electrode material.

### Example 9

This example provides a positive electrode material. The positive electrode material comprises a polyanion sodium-iron salt and graphene coated outside the polyanion sodium-iron salt. The molecular formula of the polyanion sodium-iron salt is Na₄(Fe_{0.6}Co_{0.392}Y_{0.08})₃(SO₄)₂P₂O₇. The preparation method comprises the following steps:
(1) Iron sulfate, cobalt sulfate and yttrium sulfate were mixed according to the molar ratio of metal elements of 0.6:0.392:0.08, water was added therein to prepare a metal solution with a total mass concentration of metal salts of 1.2 mol/L. Pure water was used as the solvent to prepare a 1mol/L ammonium dihydrogen phosphate solution, a 0.5 mol/L ammonia water solution, a 1 mol/L citric acid aqueous solution, and a 1 mol/L ammonium sulfate solution, respectively. Carbon spheres with a particle diameter of 2 µm were added into pure water as crystal seed, and stirred at 400 rpm for 10 min to prepare a base liquid with a concentration of 100 g/L. The metal solution, ammonium dihydrogen phosphate solution, citric acid solution and ammonium sulfate solution were added into the base liquid at a dropping speed of 200ml/min, 300ml/min, 60ml/min and 60ml/min, respectively. At the same time, ammonia water solution was also added to control the pH value of the reaction system to be 2.5, the rotation speed was controlled to be 700 rpm, and the temperature was controlled to be 90°C. The dropping time for all the four solutions was 20 hours, and the reaction was completed. After the reaction was completed, sodium carbonate was added according to the Na:Fe molar ratio of 4:3, and stirred at 700 rpm for 1 hour to obtain a precursor solution. After drying, water was added to make a precursor solution with a solid content of 500g/L.
(2) 44.5g of graphene was put into a vacuum vessel to obtain a graphene film, and then the electrospray method was used to spray 2L of the precursor solution with a solid content of 500g/L on the graphene film at a electrospray speed of 6 ml/h, a spray voltage of 15KV, a spray nozzle diameter of 10µm, and an outlet temperature of 80°C, which can ensure the slow drying of the mixture and obtain the dried product. The dried product was put into a tube furnace and calcined in a nitrogen atmosphere. The temperature was raised to 200°C at a heating rate of 1°C/min, the materials were maintained at this temperature for calcining for 4 hours, then the temperature was raised to 500°C at a heating rate of 1°C/min, and the materials were maintained at this temperature for calcining for 10 hours, the nitrogen atmosphere was maintained at 1L/min; and the calcined material was sieved with 400 mesh to make 596.8g of positive electrode material.

### Example 10

This example provides a positive electrode material and a preparation method thereof, which was basically the same as that of Example 1. The only difference was that in step (1), citric acid was not added, and 649.2 g positive electrode material was obtained.

### Example 11

This example provides a positive electrode material and a preparation method thereof, which was basically the same as that of Example 1. The only difference was that in step (1), citric acid was added dropwise at a dropping speed of 200ml/min, and 640.3g positive electrode material was obtained.

### Comparative Example 1

This comparative example provides a positive electrode material. The preparation method comprises the following steps:
(1) Iron sulfate, manganese sulfate and lanthanum sulfate were mixed according to the molar ratio of metal elements of 0.6:0.392:0.08, water was added therein to prepare a metal solution with a total mass concentration of metal salts of 1.2 mol/L. Pure water was used as the solvent to prepare a 1mol/L ammonium dihydrogen phosphate solution, a 0.5 mol/L ammonia water solution, and a 1 mol/L citric acid aqueous solution, respectively. The metal solution, ammonium dihydrogen phosphate solution and citric acid aqueous solution were added into pure water at a dropping speed of 200ml/min, 300ml/min and 60ml/min, respectively. The dropping time for all the three solutions was 20 hours. During the reaction, ammonia water solution was also added to control the pH value of the reaction system to be 2.5, the rotation speed was controlled to be 700 rpm, and the temperature was controlled to be 90°C. After the reaction was completed, sodium carbonate was added according to the Na:(Fe+Mn+La) molar ratio of 4:3, and stirred at 700 rpm for 1 hour to obtain a precursor solution. After drying, water was added to make a precursor solution with a solid content of 500g/L.
(2) 48g of graphene was put into a vacuum vessel to obtain a graphene film, and then the electrospray method was used to spray 2L of the precursor solution with a solid content of 500g/L on the graphene film at a electrospray speed of 6 ml/h, a spray voltage of 15KV, a spray nozzle diameter of 10µm, and an outlet temperature of 80°C, which can ensure the slow drying of the mixture and obtain the dried product. The dried product was put into a tube furnace and calcined in a nitrogen atmosphere. The temperature was raised to 400°C at a heating rate of 1°C/min, the materials were maintained at this temperature for calcining for 4 hours, then the temperature was raised to 700°C at a heating rate of 1°C/min, and the materials were maintained at this temperature for calcining for 10 hours, the nitrogen atmosphere was maintained at 1L/min; and the calcined material was sieved with 400 mesh to make the positive electrode material.

### Comparative Example 2

This comparative example provides a positive electrode material. The preparation method comprises the following steps:
(1) Iron sulfate, manganese sulfate and lanthanum sulfate were mixed according to the molar ratio of metal elements of 0.6:0.392:0.08, water was added therein to prepare a metal solution with a total mass concentration of metal salts of 1.2 mol/L. Pure water was used as the solvent to prepare a 1mol/L ammonium dihydrogen phosphate solution, a 0.5 mol/L ammonia water solution, and a 1 mol/L citric acid aqueous solution, respectively. Carbon spheres with a particle diameter of 2 µm were added into pure water as crystal seed, and stirred at 400 rpm for 10 min to prepare a base liquid with a concentration of 100 g/L. The metal solution, ammonium dihydrogen phosphate solution and citric acid aqueous solution were added into the base liquid at a dropping speed of 200ml/min, 300ml/min and 60ml/min, respectively. The dropping time for all the three solutions was 20 hours. During the reaction, ammonia water solution was also added to control the pH value of the reaction system to be 2.5, the rotation speed was controlled to be 700 rpm, and the temperature was controlled to be 90°C. After the reaction was completed, sodium carbonate was added according to the Na:(Fe+Mn+La) molar ratio of 4:3, and stirred at 700 rpm for 1 hour to obtain a precursor solution. After drying, water was added to make a precursor solution with a solid content of 500g/L.
(2) The precursor solution was spray-dried, and then put into a tube furnace and calcined in a nitrogen atmosphere. The temperature was raised to 400°C at a heating rate of 1°C/min, the materials were maintained at this temperature for calcining for 4 hours, then the temperature was raised to 700°C at a heating rate of 1°C/min, and the materials were maintained at this temperature for calcining for 10 hours, the nitrogen atmosphere was maintained at 1L/min; and the calcined material was sieved with 400 mesh to make the positive electrode material.

### Comparative Example 3

This comparative example provides a positive electrode material. The preparation method comprises the following steps:
(1) Iron sulfate, manganese sulfate and lanthanum sulfate were mixed according to the molar ratio of metal elements of 0.6:0.392:0.08, water was added therein to prepare a metal solution with a total mass concentration of metal salts of 1.2 mol/L. Pure water was used as the solvent to prepare a 1mol/L ammonium dihydrogen phosphate solution, a 0.5 mol/L ammonia water solution, and a 1 mol/L citric acid aqueous solution, respectively. The metal solution, ammonium dihydrogen phosphate solution and citric acid aqueous solution were added into pure water at a dropping speed of 200ml/min, 300ml/min and 60ml/min, respectively. The dropping time for all the three solutions was 20 hours. During the reaction, ammonia water solution was also added to control the pH value of the reaction system to be 2.5, the rotation speed was controlled to be 700 rpm, and the temperature was controlled to be 90°C. After the reaction was completed, sodium carbonate was added according to the Na:(Fe+Mn+La) molar ratio of 4:3, and stirred at 700 rpm for 1 hour to obtain a precursor solution. After drying, water was added to make a precursor solution with a solid content of 500g/L.
(2) The precursor solution was spray-dried, and then put into a tube furnace and calcined in a nitrogen atmosphere. The temperature was raised to 400°C at a heating rate of 1°C/min, the materials were maintained at this temperature for calcining for 4 hours, then the temperature was raised to 700°C at a heating rate of 1°C/min, and the materials were maintained at this temperature for calcining for 10 hours, the nitrogen atmosphere was maintained at 1L/min; and the calcined material was sieved with 400 mesh to make the positive electrode material.

### Experimental Example 1 ICP test results of sample

The positive electrode of Example 1 was subjected to ICP elemental analysis, and the results were shown in the table 1 below.

**Table 1. Test of content of each element**

| Element | Mass percentage content |
|---|---|
| Na | 14.59% |
| Fe | 15.91% |
| Mn | 10.23% |
| La | 5.45% |
| P | 19.65% |

It can be seen from Table 1 and Figure 1 that the chemical formula of the polyanion sodium-iron salt in the positive electrode material prepared in Example 1 was: Na₄(Fe_{0.6}Mn_{0.392}La_{0.08})₃(PO₄)₂P₂O₇.

### Experimental Example 2 Physical and chemical performances and electrical performances of positive electrode materials

Testing method: A transmission electron microscope was used to test the inner diameter and wall thickness of the positive electrode materials, and a specific surface area testing instrument was used to test the pore diameter, porosity and surface area of the positive electrode materials. The results are shown in Table 2.

**Table 2. Physical and chemical performances of positive electrode materials**

| | Inner diameter (µm) | Wall thickness (µm) | Pore diameter (nm) | Porosity (%) | Specific surface area (m²/g) |
|---|---|---|---|---|---|
| Example 1 | 2.10 | 4.30 | 151.21 | 8.51 | 25.31 |
| Example 2 | 1.08 | 3.52 | 156.45 | 8.92 | 26.44 |
| Example 3 | 4.05 | 4.21 | 140.20 | 7.63 | 24.15 |
| Example 4 | 8.21 | 4.12 | 162.35 | 7.32 | 23.25 |
| Example 5 | 0.51 | 4.21 | 152.56 | 7.38 | 23.65 |
| Example 6 | 2.52 | 4.36 | 182.21 | 15.53 | 28.62 |
| Example 7 | 2.55 | 4.21 | 110.32 | 5.01 | 16.62 |
| Example 8 | 2.87 | 4.61 | 152.53 | 8.32 | 24.83 |
| Example 9 | 2.63 | 4.75 | 132.62 | 6.43 | 21.25 |
| Example 10 | 2.12 | 4.81 | 149.52 | 8.92 | 26.63 |
| Example 11 | 2.25 | 4.54 | 151.63 | 8.52 | 24.52 |
| Comparative Example 1 | 0.23 | 4.05 | 0.45 | 0.32 | 1.25 |
| Comparative Example 2 | 1.03 | 4.02 | 40.32 | 2.12 | 3.32 |
| Comparative Example 3 | 0.31 | 4.13 | 20.32 | 0.42 | 3.25 |

The pore diameter a (nm), porosity b%, and specific surface area c (m²/g) of the positive electrode materials in various examples of the present application satisfy the following relationship: 200<a×c/b<800, and the positive electrode materials have good electrical performances.

The button battery was assembled using the positive electrode materials prepared in various Examples and Comparative Examples according to the following method: the positive electrode material, conductive carbon black and adhesive polyvinylidene fluoride (PVDF) were mixed in a mass ratio of 90:5:5, and N-methylpyrrolidone (NMP) was used as the solvent to make a slurry with a solid content of 65%. It was coated evenly on an aluminum foil. It was compacted to a compacted surface density of 2.2g/cm³ after drying, vacuum dried at 120°C for 12 hours to obtain the positive electrode plate. A metallic lithium plate was used as a negative electrode, the separator was a polypropylene porous membrane, and the electrolyte was 1mol/L of NaPF₆/(EC+DEC+DMC) (EC:DEC:DMC=1:1:1 of volume ratio).

Specific capacity test conditions: a test was performed at 0.1C (120mA/g) and a voltage range of 1.5V to 4.05V; a test was performed at 5C and a voltage range of 1.5V to 4.05V; and a test was performed at 2C and a voltage range 1.5V to 4.05V;

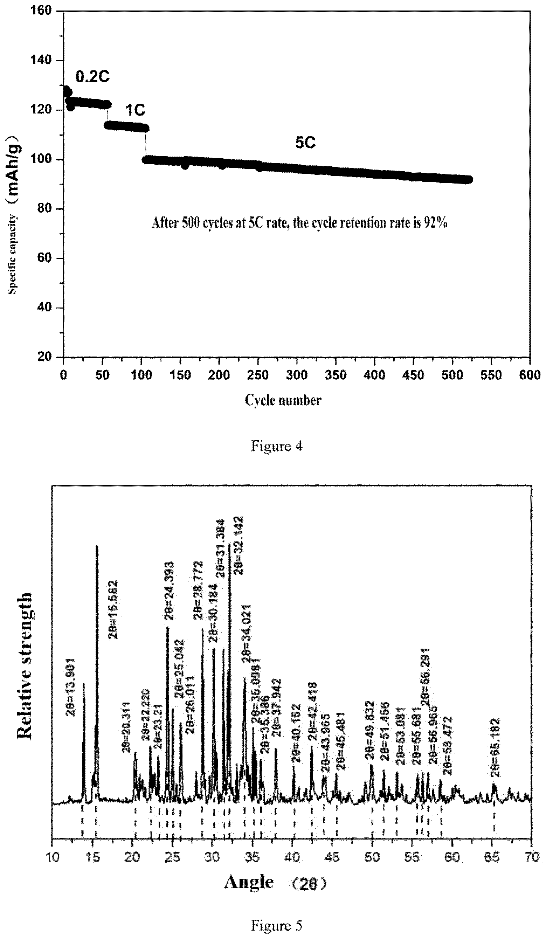

Cycling performance test conditions: 0.2C, 1C and 5C, all the voltage was in a range from 1.5V to 4.05V, the positive electrode material of Example 1 was tested at room temperature for 500 cycles, see Figure 4;

The positive electrode materials of various Examples and Comparative Examples were tested for 500 cycles at room temperature at 1C and a voltage ranging from 1.5V to 4.05V, see the table below.

**Table 3. Performance parameters of positive electrode materials**

| Number | 0.1C discharge capacity (mAh/g) | 5C discharge capacity(mAh/ g) | 500 cycle retention rate under 1C (%) | 2C discharge capacity (mAh/g) |
|---|---|---|---|---|
| Example 1 | 128.5 | 98.6 | 99.5 | 110.2 |
| Example 2 | 122.2 | 97.3 | 98.4 | 108.3 |
| Example 3 | 127.3 | 96.3 | 98.3 | 105.3 |
| Example 4 | 120.3 | 90.2 | 95.3 | 100.3 |
| Example 5 | 122.1 | 89.3 | 93.2 | 94.3 |
| Example 6 | 121.9 | 91.1 | 90.2 | 101.3 |
| Example 7 | 120.3 | 83.2 | 95.2 | 96.2 |
| Example 8 | 125.3 | 96.3 | 98.4 | 102.3 |
| Example 9 | 126.4 | 94.3 | 97.3 | 101.5 |
| Example 10 | 121.1 | 91.2 | 99.2 | 95.3 |
| Example 11 | 123.2 | 92.1 | 90.2 | 97.1 |
| Comparative Example 1 | 110.2 | 55.3 | 82.6 | 71.62 |
| Comparative Example 2 | 109.2 | 62.2 | 86.1 | 78.2 |
| Comparative Example 3 | 70.5 | 33.2 | 62.1 | 50.2 |

The positive electrode materials obtained in Examples 1-11 of the present application comprises a polyanion sodium-iron salt and graphene coated outside the polyanion sodium-iron salt. As can be seen from Table 2, the positive electrode material has a hollow porous structure. Compared with Comparative Examples 1 to 3, these positive electrode materials have significantly improved discharge capacity, cycling stability and rate performance.

Comparing Example 1 with Examples 8 and 9, by controlling the type of metal elements within the preferred range, especially by controlling the molecular formula of the polyanion sodium-iron salt to be: NaₓFe_{y}Mn_{q}Laᵣ(PO₄)_{z}(P₂O₇)ₘ, 3≤x≤4, 1.5≤y≤2, 1≤q≤1.5, 0.2≤r≤0.3, y+q+r≤3, 1<z<2, and 1≤m≤2, the capacity, cycling stability and rate performance of the positive electrode materials could be further improved.

Comparing Example 1 with Examples 4 and 5, by optimizing and selecting the particle diameter of the carbon spheres and controlling the dropping time within the preferred ranges, such that the inner diameter and wall thickness of the positive electrode materials are within the preferred range of the present application, the capacity, cycling stability and rate performance of the positive electrode materials could be further improved.

Comparing Example 1 with Examples 6 and 7, by controlling the conditions of the calcination reaction within the preferred range, such that the pore diameter, porosity and specific surface area of the positive electrode materials are within the preferred range, the capacity, cycling stability and rate performance of the positive electrode materials could be further improved.

Comparing Example 1 with Examples 10 and 11, in Example 1, by controlling the ratio of the molar amount of phosphate ions in the phosphorus source added into the base liquid, the molar amount of hydrogen ions in the protonic acid, and the total molar amount of the metal element added into the base liquid to be within the preferred range, so that pyrophosphate ions and phosphate ions coexist in the calcined positive electrode material, the capacity, cycling stability and rate performance of the positive electrode materials could be further improved.

### XRD pattern of the sample of Example 3

The positive electrode material of Example 1 was tested by an X-ray diffractometer and found to be a monoclinic phase structure with a space group of Pn2₁a and the following unit cell parameters: a= 17.9675 Å, b = 6.5402 Å, and c = 10.6672 Å. The unit cell expansion rate was 2.12%. The XRD pattern of the positive electrode material includes the following diffraction peaks at the 20 angle:

**Table 4. Structural parameters of positive electrode material**

| Peak number | Angle(2θ) | Relative intensity(%) |
|---|---|---|
| 1 | 13.901 | 5.35 |
| 2 | 15.582 | 12.23 |
| 3 | 20.311 | 2.29 |
| 4 | 22.220 | 2.57 |
| 5 | 23.210 | 2.09 |
| 6 | 24.393 | 7.84 |
| 7 | 25.042 | 4.23 |
| 8 | 26.011 | 3.59 |
| 9 | 28.772 | 7.78 |
| 10 | 30.184 | 2.29 |
| 11 | 31.384 | 6.88 |
| 12 | 32.142 | 11.54 |
| 13 | 34.021 | 5.59 |
| 14 | 35.098 | 3.33 |
| 15 | 35.386 | 2.32 |
| 16 | 37.942 | 2.46 |
| 17 | 40.125 | 1.65 |
| 18 | 42.418 | 2.58 |
| 19 | 43.965 | 1.28 |
| 20 | 45.481 | 1.35 |
| 21 | 49.832 | 1.75 |
| 22 | 51.456 | 1.51 |
| 23 | 53.081 | 1.42 |
| 24 | 55.681 | 1.34 |
| 25 | 56.291 | 1.35 |
| 26 | 56.965 | 1.39 |
| 27 | 58.472 | 1.09 |
| 28 | 65.182 | 0.9 |

Among them, the three strongest peaks were at angles of 15.582°, 24.393° and 32.142°. The peak intensity ratio of the three strongest XRD diffraction peaks of the positive electrode material was 1.56:1:1.47. The prepared material was a composite pyrophosphate salt positive electrode material with good crystallinity and stable crystal structure.

Obviously, the above examples are merely examples made for clear description, rather limiting the implementations. For those of ordinary skill in the art, other different forms of variations or modifications can also be made on the basis of the above-mentioned description. All embodiments are not necessary to be and cannot be exhaustively listed herein. In addition, obvious variations or modifications derived therefrom all fall within the scope of protection of the present invention.

## Claims

1. A positive electrode material, wherein the positive electrode material comprises a polyanion sodium-iron salt and graphene coated outside the polyanion sodium-iron salt, and the positive electrode material has a hollow porous structure.

2. The positive electrode material of claim 1, wherein the positive electrode material has a hollow porous spherical structure, preferably, the positive electrode material has an inner diameter ranging from 0.5µm to 9µm and a wall thickness ranging from 1µm to 13µm, more preferably, the positive electrode material has an inner diameter ranging from 1µm to 5µm and a wall thickness ranging from 2µm to 5µm.

3. The positive electrode material of claim 1 or 2, wherein the positive electrode material has a pore diameter ranging from 50nm to 500nm, a porosity ranging from 3% to 18%, and a specific surface area ranging from 5m²/g to 40m²/g, preferably, the positive electrode material has a pore diameter ranging from 100nm to 300nm, a porosity ranging from 5% to 12%, and a specific surface area ranging from 10m²/g to 30m²/g.

4. The positive electrode material of any one of claims 1 to 3, wherein the pore diameter a, the porosity b, and specific surface area c of the positive electrode material satisfy the following relationship: 200<a×c/b<800.

5. The positive electrode material of any one of claims 1 to 4, wherein the molecular formula of the polyanion sodium-iron salt is: NaₓFe_{y}M_{q}Bᵣ(AOn)_{z}(P₂O₇)ₘ, wherein M is selected from at least one of Ti, V, Mn, Fe, Co, Ni, Cu and Zn, A is selected from one of silicon, phosphorus, sulfur, carbon and boron, B is at least one of La, Ce, Pr, Nd, Pm, Sm, Eu, Gd, Td, Dy, Er, Tm, Yb, Lu, Sc and Y, where 2≤x≤4, 0.5≤y≤3, 0≤q≤2, 0≤r≤0.3, y+q+r≤3, 0≤z≤3, 0≤m≤3, and 1≤n≤4, and z and m are not 0 at the same time, and the molecular formula satisfies charge conservation; preferably, M is Mn, B is La, and A is P.

6. The positive electrode material of any one of claims 1 to 5, wherein the molecular formula of the polyanion sodium-iron salt is: NaₓFe_{y}Mn_{q}Laᵣ(PO₄)_{z}(P₂O₇)ₘ, 3≤x≤4, 1.5≤y≤2, 1≤q≤1.5, 0.2≤r≤0.3, y+q+r≤3, 1<z<2, and 1≤m≤2.

7. The positive electrode material of any one of claims 1 to 6, wherein the mass of graphene accounts for 1% to 20% of the total mass of the positive electrode material.

8. A method for preparing the positive electrode material of any one of claims 1 to 7, wherein the method comprises the following steps:
step S1: mixing carbon spheres and water to prepare a base liquid, adding an anion source, an alkaline solution and a metal solution containing iron salt into the base liquid to perform a precipitation reaction, and adding a sodium salt to prepare a precursor solution;
step S2: placing graphene in a vacuum environment to prepare a graphene film, electrically spraying the graphene film using the precursor solution, and calcining to obtain a positive electrode material with a hollow porous structure.

9. The method for preparing the positive electrode material of claim 8, wherein, in step S2, the electrically spraying is carried out at a feed speed ranging from 4mL/h to 10mL/h, a spray voltage ranging from 10 kV to 20kV, a spray nozzle diameter ranging from 8µm to 12µm, and a discharge temperature ranging from 50°C to 90°C; and/or, the calcining is carried out at a temperature ranging from 300°C to 800°C for a time period ranging from 5 hours to 30 hours.

10. The method for preparing the positive electrode material of claim 9, wherein the calcining comprises increasing the temperature to 350°C to 450°C at a heating rate ranging from 0.5°C/min to 2°C/min in a nitrogen atmosphere, maintaining this temperature for calcining for 3 hours to 5 hours, then increasing the temperature to 650°C to 850°C at a heating rate ranging from 0.5°C/min to 2°C/min, and maintaining this temperature for calcining for 5 hours to 20 hours; preferably, the calcining comprises increasing the temperature to 380°C to 420°C at a heating rate ranging from 0.8°C/min to 1.5°C/min in a nitrogen atmosphere, maintaining this temperature for calcining for 3 hours to 5 hours, then increasing the temperature to 680°C to 720°C at a heating rate ranging from 0.8°C/min to 1.5°C/min, and maintaining this temperature for calcining for 8 hours to 12 hours.

11. The method for preparing the positive electrode material of any one of claims 8 to 10, wherein step S 1 also satisfies at least one of the following (1)-(8):
(1) the metal solution also comprises M salt and/or B salt; preferably, M is selected from at least one of Ti, V, Mn, Fe, Co, Ni, Cu and Zn; B is at least one of La, Ce, Pr, Nd, Pm, Sm, Eu, Gd, Td, Dy, Er, Tm, Yb, Lu, Sc and Y; more preferably, M is Mn, and B is La;
(2) the anion source is selected from at least one of a silicon source, a phosphorus source, a sulfur source, a carbon source and a boron source; preferably, the anion source is selected from at least one of ammonium dihydrogen phosphate, diammonium hydrogen phosphate, triammonium phosphate, phosphoric acid, sodium dihydrogen phosphate, disodium hydrogen phosphate, sodium ammonium hydrogen phosphate, pyrophosphoric acid, sodium pyrophosphate, hypophosphorous acid, ammonium bicarbonate, ammonium sulfate, ammonium borate and ammonium silicate;
(3) the precipitation reaction process also comprises the step of adding protonic acid into the base liquid; and the anion source is a phosphorus source;
preferably, the ratio of the molar amount of phosphate ions in the phosphorus source added into the base liquid, the molar amount of hydrogen ions in the protonic acid, and the total molar amount of metal elements added into the base liquid is (2-4):(1-8):(1-3), more preferably (2-4):(1-2):(1-3);
(4) during the precipitation reaction, the pH value of the reaction liquid is controlled to be 2 to 5, preferably 2.2 to 3.2; during the precipitation reaction, the stirring rotation speed is controlled to be 500 rpm to 1000 rpm, preferably 600 rpm to 800 rpm; and during the precipitation reaction, the temperature of the reaction liquid is controlled to be 70 °C to 110°C, preferably 80°C to 100°C;
(5) the carbon spheres have a particle diameter ranging from 0.5µm to 8.0 µm, preferably from 1µm to 4 µm;
(6) the concentration of the metal solution is in a range from 0.5 mol/L to 3mol/L, preferably from 0.6 mol/L to 1.5mol/L; the concentration of the anion source is in a range from 0.5 mol/L to 3mol/L; and the metal solution and the anion source are added dropwise at a dropping speed ranging from 60 mL/h to 400mL/h into the base liquid for a time period ranging from 5 hours to 60 hours for reaction, preferably 10 hours to 30 hours;
(7) the alkaline solution is ammonia water, preferably, the ammonia water has a concentration ranging from 0.5mol/L to 1.5mol/L; and
(8) the base liquid has a concentration ranging from 50g/L to 200g/L.
